# DEMANDE DE BREVET EUROPEEN

(11) **EP 4 703 195 A1**
(43) Date de publication de la demande: **04.03.2026**
(21) Numéro de dépôt: 25198015.7
(22) Date de dépôt: 26.08.2025
(51) Int. Cl.: B60N 2/07, B60N 2/68, B23K 9/025, B23K 9/173, B23K 33/00

(54) **SYSTÈME DE MONTAGE D'UN SIÈGE DE VÉHICULE ET PROCÉDÉ DE FABRICATION**

(30) Priorité: 27.08.2024 FR 2409137
(71) Demandeur: Faurecia Sièges d'Automobile, 92000 Nanterre (FR)
(72) Inventeur: GAROTTE, Gérald, 61220 BELLOU EN HOULME (FR)
(74) Mandataire: Lavoix

(57) **Abrégé**

La présente invention concerne un système de montage d'un siège de véhicule, notamment automobile, comprenant une glissière (24) et un composant (40), dans lequel:
- la glissière (24) comprend un premier élément de glissière (26) et un deuxième élément de glissière (28) montés coulissants l'un sur l'autre suivant une direction longitudinale (X),
- le composant (40) comprend une portion de fixation (46) possédant un bord de fixation (48) fixé sur une zone de fixation (42) du premier élément de glissière (26) par l'intermédiaire d'une soudure (44), le composant (40) étant muni d'un chanfrein (50) le long du bord de fixation (48).

## Description

La présente invention concerne le domaine des systèmes de montage de siège de véhicule, notamment de véhicule automobile, permettant un coulissement du siège par rapport au véhicule.

Il est possible de monter un siège de véhicule autombile dans un véhicule automobile par l'intermédiaire d'un système de montage comprenant une ou plusieurs glissières permettant le coulissement du siège par rapport au châssis du véhicule automobile. Le coulissement du siège permet au conducteur ou à un passager de régler la position du siège, par exemple en fonction de la taille du conducteur ou du passager.

Chaque glissière comprend un première élément de glissière et un deuxièmé élément de glissière montés coulissants l'un sur l'autre, l'un étant fixé au véhicule et l'autre fixé au siège.

Il est possible de fixer un composant associé au siège par soudage sur le premier élément de glissière ou le deuxièmé élement de glissière, de telle manière que le composant se déplace avec le siège. Un tel composant est par exemple une attache ou un point d'ancrage de ceinture de sécurité.

Un des buts de l'invention est de proposer un système de montage permettent une fixation par soudage d'un composant sur un élément de glissière qui soit robuste et fiable.

A cet effet, l'invention a pour objet un système de montage d'un siège de véhicule, notamment automobile, comprenant une glissière et un composant, dans lequel:
- la glissière comprend un premier élément de glissière et un deuxième élément de glissière montés coulissants l'un sur l'autre suivant une direction longitudinale,

- le composant comprend une portion de fixation possédant un bord de fixation fixé sur une zone de fixation du premier élément de glissière par l'intermédiaire d'une soudure, le composant étant muni d'un chanfrein le long du bord de fixation.

La soudure réalisée entre le premier élément de glissière et un bord de fixation du composant muni d'un chanfrein permet de réaliser une soudure avec zone d'entrée large entre le chanfrein et la zone de fixation, ce qui facilite le soudage, et une distance réduite entre le bord de fixation et la zone de fixation, ce qui est favorable à la robustesse de la soudure.

Il en résulte une soudure robuste et fiable, en particulier pour un composant de sécurité tel qu'une attache ou un point d'ancrage de ceinture de sécurité.

Suivant d'autres aspects avantageux de l'invention, le système de montage comprend une ou plusieurs des caractéristiques optionnelles suivantes, prises individuellement ou suivant toutes les combinaisons techniquement possibles :
- La portion de fixation possède une première face et une deuxième face opposées, le bord de fixation s'étendant entre la première face et la deuxième face.
- Le chanfrein s'étend entre le bord de fixation et la première face de la portion de fixation.
- Le chanfrein s'étend obliquement par rapport au bord de fixation et à la première face de la portion de fixation.
- Le composant comprend une languette de fixation comprenant une portion proximale et une portion distale définissant la portion de fixation, la portion proximale et la portion de fixation étant inclinées l'une par rapport à l'autre, en étant reliée par exemple par un pli.
- La zone de fixation est convexe.
- La portion de fixation s'étend suivant une direction d'extension parallèle à la normale à la zone de fixation à l'endroit de la soudure entre le bord de fixation et la zone de fixation.
- La zone de fixation est arrondie, par exemple en arc de cercle autour d'un axe central.
- La portion de fixation s'étend suivant une direction d'extension radiale relativement à l'axe central à l'endroit de la soudure entre le bord de fixation et la zone de fixation.
- La zone de fixation est profilée suivant la direction longitudinale et/ou le bord de fixation s'étend suivant la direction longitudinale et/ou le chanfrein s'étend suivant la direction longitudinale.
- La soudure est réalisée avec apport de matière, en particulier avec un métal d'apport.
- Le composant est une attache, par exemple un point d'ancrage de ceinture de sécurité.
- Le premier élément de glissière et le deuxième élément de glissière sont profilés suivant la direction longitudinale.
- Le deuxième élément de glissière est destiné à être fixé au châssis du véhicule et le premier élément de glissière est configuré pour être fixé au siège, en particulier à une assise du siège.

L'invention a également pour objet un ensemble comprenant un siège de véhicule et un système de montage tel que décrit ci-dessus, le siège de véhicule étant fixé sur le premier élément de glissière de la glissière du système de montage.

L'invention porte également sur un procédé de fabrication d'un système de montage d'un siège de véhicule, notamment automobile, comprenant les étapes de :
- obtenir un premier élément de glissière d'une glissière comprenant le premier élément de glissière et un deuxième élément de glissière configurés pour être montés coulissants l'un sur l'autre suivant une direction longitudinale,
- obtenir un composant comprenant une portion de fixation prévue pour la fixation du composant sur le premier élément de glissière,
- fixer la portion de fixation sur le premier élément de glissière par soudage d'un bord de fixation de la portion de fixation sur une zone de fixation du premier élément de glissière, le composant étant muni d'un chanfrein le long du bord de fixation la soudure étant réalisée de préférence avec apport de matière, en particulier en apportant la matière apportée entre le bord de fixation et la zone de fixation via une zone d'entrée définie entre le chanfrein et la zone de fixation.

Suivant d'autres aspects avantageux de l'invention, le procédé de fabrication comprend une ou plusieurs des caractéristiques optionnelles suivantes, prises individuellement ou suivant toutes les combinaisons techniquement possibles :
- La zone de fixation est convexe et/ou la portion de fixation s'étend suivant une direction d'extension parallèle à la normale à la zone de fixation à l'endroit de la soudure entre le bord de fixation et la zone de fixation.
- Le composant comprend une languette de fixation comprenant une portion proximale et une portion distale définissant la portion de fixation, la portion proximale et la portion de fixation étant inclinées l'une par rapport à l'autre, en étant reliée par exemple par un pli.
- Le procédé de fabrication comprend, avant la soudure, la mise en appui d'une portion d'appui du composant contre une zone d'appui de première élément de glissière, en particulier avec un appui plan entre la portion d'appui du composant contre une zone d'appui de première élément de glissière, pour positionner le composant relativement au premier élément de glissière lors du soudage.

L'invention et ses avantages apparaîtront plus clairement à la lecture de la description qui va suivre, donnée uniquement à titre d'exemple non limitatif, et faite en référence aux dessins dans lesquels :
La Figure 1 est une vue en élévation d'un siège de véhicule monté dans un véhicule
La Figure 2 est une vue en coupe d'un système de montage du siège de véhicule, comprenant un premier élément de glissière, un deuxième élément de glissière et un composant fixé sur le premier élément de glissière ;
La Figure 3 est une vue en perspective éclatée d'un premier élément de glissière et du composant ;
La Figure 4 est une vue en coupe du premier élément de glissière et du composant lors d'une opération de soudage du composant sur le premier élément de glissière.

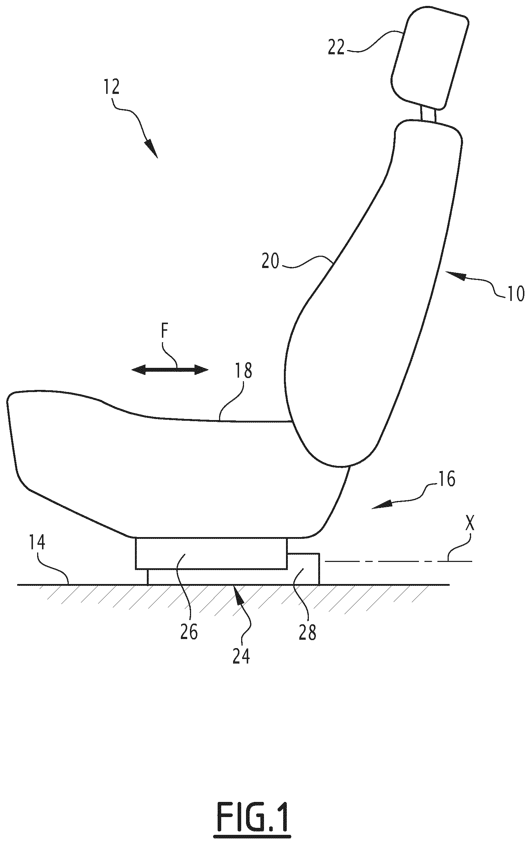

Tel qu'illustré sur la Figure 1, un ensemble comprend un siège 10 monté dans un véhicule 12, en particulier sur un châssis 14 du véhicule 12, par l'intermédiaire d'un système de montage 16.

Le siège 10 comprend une assise 18 et un dossier 20. Le siège 10 comprend avantageusement un appui-tête 22 disposé à une extrémité supérieure du dossier 20. Le système de montage 16 est de préférence disposé entre l'assise 18 et le châssis16 du véhicule 12.

Le système de montage 16 est configuré pour permettre un coulissement du siège 10 suivant une direction longitudinale X, comme illustré par la flèche F sur la Figure 1. En particulier, l'assise 18 est montée coulissante sur le châssis 14 par l'intermédiaire du système de montage 16, suivant la direction longitudinale X.

Le système de montage 16 comprend une ou plusieurs glissières 24, chaque glissière 24 possédant un premier élément de glissière 26 et un deuxième élément de glissière 28 coulissant l'un par rapport à l'autre suivant la direction longitudinale X.

Le premier élément de glissière 26 est par exemple fixé sur le siège 10, en particulier sur l'assise 18, le deuxième élément de glissière 28 étant fixé sur le véhicule 12, en particulier sur le châssis 14. En variante, la configuration est inversée.

Le système de montage 16 comprend par exemple deux glissières 24 parallèles, i.e. permettant le coulissement du siège 10 relativement au véhicule suivant la même direction longitudinale X.

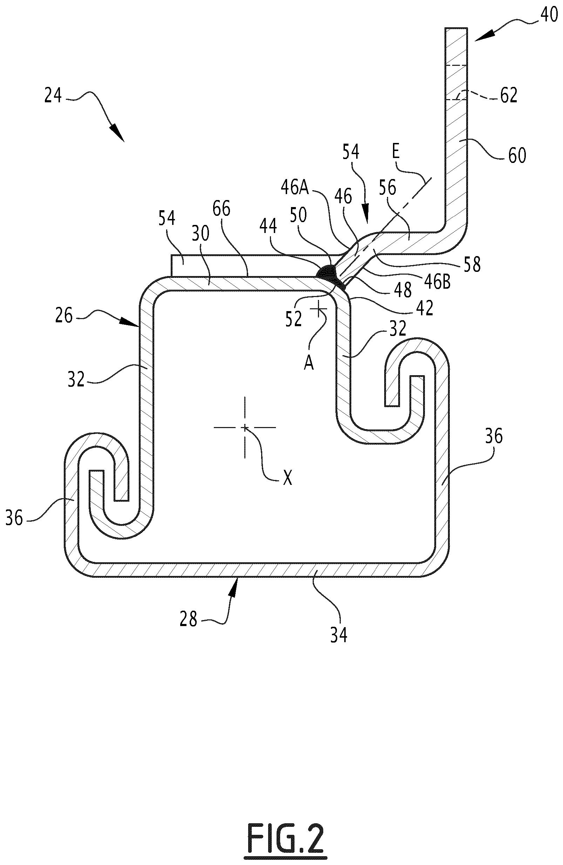

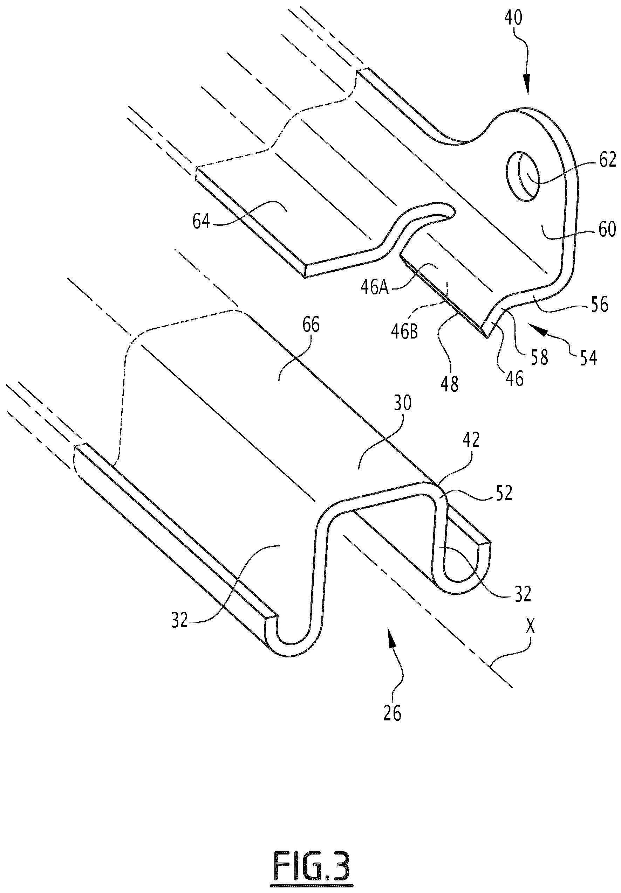

Les glissières 24 sont analogues une seule glissière sera décrite plus en détail en référence aux Figures 2 à 4.

Comme illustré sur la Figure 2, le premier élément de glissière 26 de la glissière 24 est par exemple un premier profilé.

Le premier élément de glissière 26 comprend par exemple une première âme 30 et deux premières ailes 32. La première âme 30 s'étend entre les deux première ailes 32. Chacune des premières ailes 32 s'étend d'un côté respectif à partir de la première âme 30. Les premières ailes 32 ont par exemples leurs bords libres repliés. Le premier élément de glissière 26 présente un profil ayant une forme générale à U
Le premier élément de glissière 26 est par exemple réalisé en métal.

Le deuxième élément de glissière 28 est par exemple un deuxième profilé.

Le deuxième élément de glissière 26 comprend par exemple un deuxième âme 34 et deux deuxièmes ailes 36. La deuxième âme 34 s'étend entre les deux deuxièmes ailes 36. Chacune des deuxième ailes 36 s'étend d'un côté respectif à partir de la deuxième âme 34. Les deuxièmes ailes 32 ont par exemples leurs bords libres repliés.

Le deuxième élément de glissière 28 est par exemple réalisé en métal.

Tel qu'illustré sur la Figure 2, le système de montage 16 comprend un composant 40 fixé sur une zone de fixation 42 du premier élément de glissière 26 par l'intermédiaire d'une soudure 44.

Le composant 40 est par exemple réalisé en métal.

Le composant 40 comprend une portion de fixation 46 possédant un bord de fixation 48, la soudure 44 étant réalisée entre le bord de fixation48 et la zone de fixation 42, le composant 40 étant muni d'un chanfrein 50 le long du bord 48.

Le bord de fixation 48 et le chanfrein 50 s'étendent par exemple parallèlement à la direction longitudinale X.

La portion de fixation 46 présente par exemple une forme plate et allongée.

La portion de fixation 46 possède une première face 46A et une deuxième face 46B opposée. La première face 46A et la deuxième face 46B s'étendent par exemple parallèlement entre elles.

Le bord de fixation 48 s'étend ente la première face 46A et la deuxième face 46B, de préférence perpendiculairement à la première face 46A et à la deuxième face 46B.

Le chanfrein 50 s'étend par exemple entre le bord de fixation 48 et la première face 46A obliquement par rapport au bord de fixation 48 et par rapport à la première face 46A.

En coupe dans un plan perpendiculaire à la direction longitudinale X, comme sur la Figure 2, le bord de fixation 48 et le chanfrein 50 sont inclinés l'un par rapport à l'autre d'un angle d'inclinaison non nul.

La zone de fixation 42 s'étend suivant la direction longitudinale X. La zone de fixation 42 du premier élément de glissière 26 est profilée suivant la direction longitudinale X. La zone de fixation 42 est par exemple arrondie et convexe.

La zone de fixation 42 est par exemple une surface d'une jonction 52 arrondie entre la première âme 30 et une parmi les premières ailes 32.

De préférence, en vue en coupe dans un plan perpendiculaire à la direction longitudinale X, la zone de fixation 42 arrondie s'étend en arc de cercle, par exemple sur un angle d'environ 90°, autour d'un axe central A parallèle à la direction longitudinale X.

La jonction 52 est de préférence arrondie en arc de cercle autour de l'axe central A, par exemple sur un angle d'environ 90°.

La jonction 52 est par exemple un pli formé entre la première âme 30 et la première ailes 32 reliée à la première âme 30 via cette jonction 52.

De préférence, en vue en coupe dans un plan perpendiculaire à la direction longitudinale X, la portion de fixation 46 s'étend suivant une direction d'extension E sensiblement parallèle à la normale à la zone de fixation 42 à l'endroit de la soudure 44.

Lors que la zone de fixation 42 est arrondie en arc de cercle, la direction d'extension E s'étend radialement par rapport à l'axe central A autour duquel la zone de fixation 42 s'étend en arc de cercle.

Le bord 48 est de préférence sensiblement perpendiculaire à la direction d'extension E, le chanfrein 50 s'étendant de manière oblique par rapport à la direction d'extension E, i.e. ni perpendiculairement ni parallèlement à la direction d'extension E.

Dans des exemples, le composant 40 comprend par exemple une languette de fixation 54, la portion de fixation 46 faisant partie de la languette de fixation 54.

La languette de fixation 54 comprend par exemple une portion proximale 56 et une portion distale définie par la portion de fixation 46. La portion proximale 56 est de préférence reliée au reste du composant 40. La portion de fixation 46 est libre, avant son soudage sur la zone de fixation 42.

La portion proximale 56 et la portion de fixation 46 sont par exemple inclinées l'une par rapport à l'autre, en particulier en vue direction longitudinale X. Le composant 40 présente par exemple un pli intermédiaire 58 entre la portion de proximale 56 et la portion de fixation 46.

Lorsque le système de montage 16 est fixé dans le véhicule, la portion proximale 56 s'étend par exemple horizontalement, la portion de de fixation 46 s'étendant obliquement, ni horizontalement, ni verticalement.

En vue en coupe dans un plan perpendiculaire à la direction longitudinale X, comme sur la Figure 2, la portion proximale 54 et la portion de fixation 46 forment entre elles un angle non nul. Le composant 40 comprend par exemple une portion d'attache 60 configurée pour attacher un élément de confort ou un élément sécurité sur le composant 40, comme par exemple une ceinture de sécurité. La portion d'attache 60 est par exemple munie d'un orifice d'attache 62 pour attacher l'élément de sécurité ou l'élément de confort.

La portion d'attache 60 présente par exemple une forme plate.

La portion d'attache 60 s'étend par exemple verticalement lorsque le système de montage 16 est fixé dans le véhicule.

La languette de fixation 54, incluant la portion de fixation 46, et la portion d'attache 60 sont par exemple formées en une seule pièce de matière, par exemple en une seule pièce de métal, par exemple à partir d'une plaque de métal, en particulier par usinage, perçage et/ou pliage.

Lorsque la languette de fixation 54 possède une portion proximale 56 à partir de laquelle la portion de fixation 46 s'étend, la portion proximale 56 s'étend par exemple à partir de la portion d'attache 60, en étant inclinée par rapport à la portion d'attache 60, et en particulier perpendiculaire à la portion d'attache 60.

Optionnellement, le composant 40 comprend une portion d'appui 64 configurée pour venir en appui, de préférence en appui plan, sur une zone d'appui 66 du premier élément de glissière 26.

La zone d'appui 66 est par exemple une surface de la première âme 30 du premier élément de glissière 26.

Le composant 40 est fixé sur le premier élément de glissière 16 seulement par l'intermédiaire de la soudure 44. Dans un tel cas, le composant 40 n'est fixé au premier élément de glissière 26 par aucune autre soudure et aucun élément de fixation tel qu'un rivet ou une vis.

Dans des variantes, le composant 40 est fixé sur le premier élément de glissière 26 par une ou plusieurs autres soudures et/ou un ou plusieurs autres éléments de fixation tels qu'un rivet ou une vis. Il est par exemple possible de fixer une portion d'appui 64 sur le premier élément de glissière à l'aide d'une ou plusieurs soudures et/ou d'un ou plusieurs autres éléments de fixation tels qu'un rivet ou une vis.

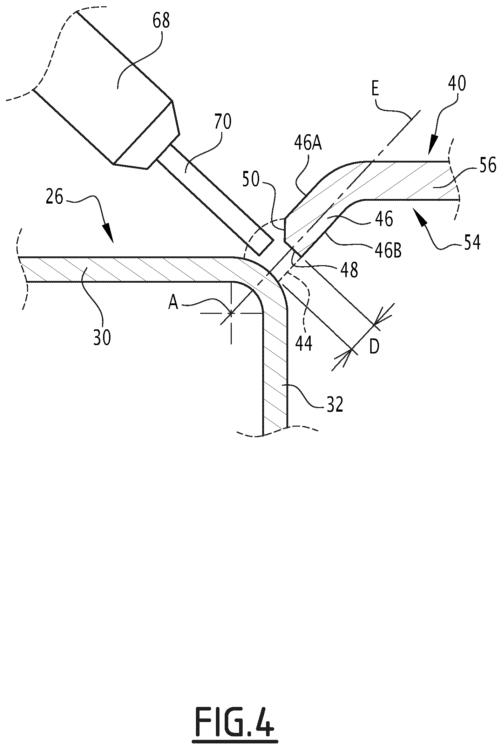

Comme illustré sur la Figure 4, la soudure 44 (illustrée en traits mixtes sur la Figure 4) est de préférence réalisée par soudure avec apport de matière, par exemple par transfert de métal à froid (ou CMT pour « Cold Metal Transfer » en anglais), par soudage métal sous gaz inerte (ou MIG pour « Metal Inert Gas » en anglais) ou par soudage métal sous gaz actif (ou MAG pour « Metal Active Gas en anglais).

Sur la Figure 4 sont représentés une tête de soudage 68 et un fil de soudage 70 pour déposer de la matière et former la soudure 44 sous la forme d'un cordon de soudure entre le bord de fixation 48 et la zone de fixation 42.

Pour la réalisation de la soudure 44, le composant 40 est disposé contre le premier élément de glissière 26. Le positionnement (position et orientation) est facilité par la prévision d'une portion d'appui 64 qui permet un positionnement précis du composant 40 par rapport à au premier élément de glissière 26, et en particulier relativement à la zone de fixation 42.

La soudure 44 est ensuite réalisée, de préférence du côté de la portion de fixation 42 où se situe le chanfrein 50, en particulier apportant la matière apportée de la soudure entre le bord de fixation 48 et la zone de fixation 42 via une zone d'entrée définie entre le chanfrein 50 et la zone de fixation 42.

La prévision du chanfrein 50 permet de former une zone d'entrée large entre le chanfrein 50 et la zone de fixation 42, ce qui favorise la pénétration de la soudure 44 entre le bord de fixation 48 et la zone de fixation 42, tout en prévoyant une distance D réduite entre le bord de fixation 48 et la zone de fixation 42 pour minimiser la taille de la soudure 44 entre le bord de fixation 48 et la zone de fixation 42.

L'utilisation d'une zone de fixation 42 arrondie, en particulier convexe, en particulier avec un profil en arc de cercle, contribue à la formation d'une zone d'entrée large entre le chanfrein 50 et la zone de fixation 42 avec une distance réduite entre le bord de fixation 48 et la zone de fixation 42.

L'orientation de la portion de fixation 46 sensiblement radialement relativement à la zone de fixation 42 s'étendant en arc de cercle permet de faire travailler la soudure 44 en limitant les contraintes ce qui rend la soudure 44 plus fiable.

Le composant 40 est par exemple une attache ou point d'ancrage pour une ceinture de sécurité.

Lorsque le système de montage 16 comprend deux glissières 24, une seule glissière 24 est munie d'un composant 40 tel qu'un composant définissant un point d'ancrage ou chaque glissière est munie d'un composant définissant un point d'ancrage, l'un pour la fixation permanente d'une extrémité d'une ceinture de sécurité et l'autre pour la fixation du dispositif de verrouillage de la ceinture de sécurité.

## Revendications

1. Système de montage (16) d'un siège (10) de véhicule, notamment automobile, comprenant une glissière (24) et un composant (40), dans lequel:
- la glissière (24) comprend un premier élément de glissière (26) et un deuxième élément de glissière (28) montés coulissants l'un sur l'autre suivant une direction longitudinale (X),
- le composant (40) comprend une portion de fixation (46) possédant un bord de fixation (48) fixé sur une zone de fixation (42) du premier élément de glissière (26) par l'intermédiaire d'une soudure (44), le composant (40) étant muni d'un chanfrein (50) le long du bord de fixation (48).

2. Système de montage selon la revendication 1, dans lequel la portion de fixation (42) possède une première face (46A) et une deuxième face (46B) opposées, le bord de fixation (48) s'étendant entre la première face (46A) et la deuxième face (46B).

3. Système de montage selon la revendication 2, dans lequel le chanfrein (50) s'étend entre le bord de fixation (48) et la première face (46A) de la portion de fixation (46).

4. Système de montage selon la revendication 3, dans lequel le chanfrein (50) s'étend obliquement par rapport au bord de fixation (48) et à la première face (46A) de la portion de fixation (46).

5. Système de montage selon l'une quelconque des revendications précédentes, dans lequel le composant (40) comprend une languette de fixation (54) comprenant une portion proximale (56) et une portion distale définissant la portion de fixation (46), la portion proximale (56) et la portion de fixation (46) étant inclinées l'une par rapport à l'autre, en étant reliée par exemple par un pli (58).

6. Système de montage selon l'une quelconque des revendications précédentes, dans lequel la zone de fixation (42) est convexe.

7. Système de montage selon la revendication 6, dans lequel la portion de fixation (44) s'étend suivant une direction d'extension (E) parallèle à la normale à la zone de fixation (42) à l'endroit de la soudure (44) entre le bord de fixation (48) et la zone de fixation (42).

8. Système de montage selon l'une quelconque des revendications précédentes, dans lequel la zone de fixation (42) est profilée suivant la direction longitudinale (X) et/ou le bord de fixation (48) s'étend suivant la direction longitudinale (X) et/ou le chanfrein (50) s'étend suivant la direction longitudinale (X).

9. Ensemble comprenant un siège de véhicule (10) et un système de montage (16) selon l'une quelconque des revendications précédentes, le siège de véhicule étant fixé sur le premier élément de glissière (26) de la glissière (24) du système de montage (16).

10. Procédé de fabrication d'un système de montage (16) d'un siège (10) de véhicule, notamment automobile, comprenant les étapes de :
- obtenir un premier élément de glissière (26) d'une glissière (24) comprenant le premier élément de glissière (26) et un deuxième élément de glissière (28) configurés pour être montés coulissants l'un sur l'autre suivant une direction longitudinale (X),
- obtenir un composant (40) comprenant une portion de fixation (46) prévue pour la fixation du composant sur le premier élément de glissière (26),
- fixer la portion de fixation (46) sur le premier élément de glissière (26) par soudage d'un bord de fixation (48) de la portion de fixation (46) sur une zone de fixation (42) du premier élément de glissière (26), le composant (40) étant muni d'un chanfrein (50) le long du bord de fixation (48) la soudure étant réalisée de préférence avec apport de matière, en particulier en apportant la matière apportée entre le bord de fixation (48) et la zone de fixation (42) via une zone d'entrée définie entre le chanfrein (50) et la zone de fixation (42).
